# EUROPÄISCHE PATENTSCHRIFT

(11) **EP 2 826 364 B1**
(45) Veröffentlichungstag und Bekanntmachung des Hinweises auf die Patenterteilung: **10.08.2016**
(21) Anmeldenummer: 13185421.8
(22) Anmeldetag: 20.09.2013
(51) Int. Cl.: A01K 1/02

(54) **Transportbehälter für ein Fell aufweisende Tiere**
Transport container for animals with fur
Récipient de transport pour un animal à fourrure

(30) Priorität: 14.07.2013 DE 102013107441
(43) Veröffentlichungstag der Anmeldung: 21.01.2015
(73) Patentinhaber: iLess GmbH, 63065 Offenbach (DE)
(72) Erfinder: Salzmann, Karl, 65462 Ginsheim (DE)
(74) Vertreter: Klein, Thomas

(56) Entgegenhaltungen:
- WO-A1-2011/014584
- US-A- 3 994 260
- US-A- 5 277 148
- US-A1- 2001 029 900
- US-A1- 2006 213 452
- US-B1- 6 481 383

## Beschreibung

Die Erfindung bezieht sich auf einen Transportbehälter für ein Fell aufweisende Tiere zur Anordnung in Fahrzeugen, der zwei Seitenwände, eine Vorderwand sowie eine Deckelwand aufweist, die ganz oder teilweise aus einem flexiblen Netzmaterial) bestehen.

Bei derartigen bekannten Transportbehältern für Tiere ist das Netzmaterial großmaschig, da es nur als Abtrennung des Innenraums des Transportbehälters zum weiteren Innenraum des Fahrzeugs dient, und ein Tier, insbesondere einen Hund daran hindern soll in den weiteren Innenraum des Fahrzeugs zu gelangen.

Aus der US 2006/213452 A1 und der US 5 277 148 A sind Transportbehälter der eingangs genannten Art bekannt.

Dabei ist in der US 2006/213452 A1 das Netzmaterial in Form eines groben Siebes oder Fischernetzes ausgebildet.

Das Netzmaterial der US 5 277 148 A ist ein Maschengewebe aus einem kleine Öffnungen aufweisenden groben Siebmaterial, das es erlaubt das Haustier zu sehen sowie dem Haustier es erlaubt nach außen zu schauen. Aus der US 6 481 383 B1 ist ein Kleidungsstück für Haustiere bekannt, das aus einem Gewebe mit einer Maschenweite zwischen 1 mm und 10 mm besteht.

Aufgabe der Erfindung ist es einen Transportbehälter für ein Fell aufweisende Tiere zu schaffen, der eine Beeinträchtigung des weiteren Innenraums des Fahrzeugs sowie der darin anwesenden Personen durch Haare des Fells vermeidet.

Diese Aufgabe wird erfindungsgemäß dadurch gelöst, daß das flexible Netzmaterial eine Maschenweite <1,5 mm aufweist und der Transportbehälter in einem Laderaum des Fahrzeugs anordenbar, der eine Hecköffnung aufweist, die durch eine Heckklappe verschließbar ist, wobei der Transportbehälter an der der Vorderwand entgegengesetzten Seite eine zumindest annähernd der Hecköffnung des Fahrzeugs entsprechende Öffnung aufweist und die Ränder der Seitenwände und der Deckelwand sowie ggf. des Bodens entlang der Öffnung an dem durch die Heckklappe verschießbaren Öffnungsrand der Hecköffnung befestigbar sind oder wobei der Transportbehälter an der der Vorderwand entgegengesetzten Seite eine Öffnung aufweist und die Ränder der Seitenwände und der Deckelwand sowie ggf. des Bodens über ein schlauchartiges flexibles Zwischenteil entlang der Öffnung an dem durch die Heckklappe verschießbaren Öffnungsrand der Hecköffnung befestigbar sind.

Durch diesen Transportbehälter können aufgrund der geringen Maschenweite Haare des Fells, die das Tier, insbesondere ein Hund verliert, nicht durch die Wände des Transportbehälters aus dessen Innerem nach außen in den weiteren Innenraum des Fahrzeugs gelangen.

Für die rückseitige Öffnung des Transportbehälters kein separater Verschluß erforderlich. Die rückseitige Öffnung des Transportbehälters ist dann durch die Heckklappe verschließbar.

Das Zwischenteil hat dabei die Funktion eines Adapters.

Bei beiden Ausführungsvarianten besteht eine absolute Trennung zwischen dem Inneren des Transportbehälters und dem weiteren Inneren des Fahrzeugs unabhängig davon, ob die Heckklappe geöffnet oder geschlossen ist.

Der Transportbehälter vermeidet eine meist schwierige Reinigung des weiteren Innenraums des Fahrzeugs von den Tierhaaren. Ein gesundheitliche Probleme erzeugendes Einatmen von Tierhaaren von Personen im weiteren Innenraum des Fahrzeugs wird vermieden. Weiterhin wird durch den von Tierhaaren freien weiteren Innenraum des Fahrzeugs vermieden, daß insbesondere bei einem Fahrer des Fahrzeugs Tierhaare in ein Auge gelangen, die zum Tränen des Auges und damit zu einer verkehrsgefährdenden Situation führen können. Tierhaare können die Filter der Klimaanlage verstopfen, die Kleidung von Fahrzeuginsassen verunreinigen, eine Geruchsbelästigung sein, Allergien bei Allergikern verursachen und unangenehme Gerüche verbreiten. All dies alles wird durch den erfindungsgemäßen Transportbehälter zumindest weitgehend vermieden.

Besonders effektiv wird eine Beeinträchtigung durch Tierhaare vermieden, wenn das flexible Netzmaterial eine Maschenweite < 1,0 mm, insbesondere eine Maschenweite zwischen 0,04 und 0,5 mm aufweist.

Ist das Netzmaterial durchsichtig, so kann bei Anordnung des Transportbehälters in einem Laderaum des Fahrzeugs dessen Fahrer gut durch die Heckscheibe den Bereich hinter dem Fahrzeug beobachten.

Gleichzeitig ist es für das im Transportbehälter transportierte Tier beruhigend seine Umgebung gut sehen zu können.

Zumindest die Vorderwand kann ganz oder teilweise aus dem flexiblen Netzmaterial bestehen.

Das Innere des Transportbehäfters ist vollkommen geschlossen, wenn der Tiertransportbehälter einen Boden aufweist.

Dies ermöglicht es zum Reinigen des Transportbehälters diesen komplett dem Fahrzeug zu entnehmen.

Zur Anpassung an den Boden des Fahrzeugs kann auch der der Boden des Transportbehälters aus einem flexiblen Werkstoff und zum Schutz gegen Durchtreten von Flüssigkeiten aus einem wasserundurchlässigen Werkstoff bestehen.

Es ist aber auch möglich, daß der Boden so wie die Wände aus dem flexiblen Netzmaterial besteht und eine Bodenmatte in dem Transportbehälter auf den Boden aufgelegt wird. Diese Bodenmatte kann dann zum Schutz gegen Durchtreten von Flüssigkeiten aus einem wasserundurchlässigen Werkstoff bestehen.

Dabei besteht vorzugsweise das flexible Netzmaterial und/oder der Boden aus einem strapazierfähigen und leicht reinigbaren Werkstoff wie z.B. aus einem Polyamid.

In einfacher Ausbildung kann an dem Öffnungsrand der Hecköffnung eine Heckklappendichtung angeordnet sein, die vorzugsweise die fahrzeugseitig bereits vorhanden ist, und die Ränder der Seitenwände und der Deckelwand sowie ggf. des Bodens oder der dem Transportbehälter abgewandte umlaufende Rand des Zwischenteils können mit der Heckklappendichtung oder einem Trägerteil der Dichtung verbindbar sein.

Ist die Heckklappendichtung ein auf einen sich entlang der Hecköffnung erstreckenden Steg aufsteckbarer Dichtungsketer, wobei die Ränder der Seitenwände und der Deckelwand sowie ggf. des Bodens oder der umlaufende Rand des Zwischenteils an dem Steg angeordnet und von dem Dichtungsketer übergriffen sind, so sind zur Befestigung der Ränder des Transportbehälters keine zusätzlichen Bauteile erforderlich.

Eine leichte Verbindung der Ränder des Transportbehälters mit der Heckklappendichtung ist auch möglich, wenn die Heckklappendichtung ein auf einen sich entlang der Hecköffnung erstreckenden Steg aufsteckbarer U-förmiger Dichtungsketer ist, wobei die Ränder der Seitenwände und der Deckelwand sowie ggf. des Bodens oder der umlaufende Rand des Zwischenteils an mit dem der Hecköffnung näheren Schenkel des "U" des Dichtungsketers verbindbar sind.

Dazu kann in einfacher, keine Montagewerkzeuge benötigender Weise auf dem der Hecköffnung näheren Schenkel des "U" des Dichtungsketers ein klettverschlußartiges Band fest angeordnet sein, mit dem die Ränder der Seitenwände und der Deckelwand sowie ggf. des Bodens oder der umlaufende Rand des Zwischenteils lösbar verbindbar sind.

Zu einer einfachen Herstellbarkeit führt es, wenn Seitenwände, Vorderwand und Deckelwand sowie ggf. das Zwischenteil separate Bauteile sind, die an ihren aneinander angrenzenden Rändern durch Schweißen und/oder Vernähen miteinander verbunden sind.

Es ist aber auch möglich, daß Seitenwände, Deckelwand und Boden als ein einteiliges, schlauchartiges Bauteil hergestellt werden, dessen eine Öffnungsseite dann mit der Vorderwand verschlossen wird.

Zur Fixierung des Transportbehälters im Laderaum des Fahrzeugs kann der Transportbehälter an Wandbereichen und/oder dem Laderaumboden des Laderaums des Fahrzeugs lösbar befestigbar sein.

Dazu können entlang der Verbindungsbereiche der Seitenwände mit der Vorderwand und der Deckelwand Befestigungsösen angeordnet sein, die mittels Verbindungselementen mit Halteelementen an Wandbereichen und/oder dem Laderaumboden des Laderaums des Fahrzeugs verbindbar sind.

Sind dabei die Verbindungselemente elastische Zugelemente, so können durch diese auch bei unterschiedlichen Abständen zwischen den befestigungsösen und den Halteelementen angewandt werden.

Ein Ausführungsbeispiel der Erfindung wird in der Zeichnung dargestellt und wird im folgenden näher beschrieben. Es zeigen
- Figur 1: eine perspektivische Ansicht eines Transportbehälters
- Figur 2: eine perspektivische Explosionsdarstellung eines Abschnitts eines Dichtungsketers und eines Abschnitts eines Steges mit übergreifendem flexiblem Netzmaterial
- Figur 3: eine perspektivische Darstellung eines Abschnitts eines Dichtungsketers mit klettverschlußartigem Band und darauf angeordnetem flexiblem Netzmaterial
- Figur 4: eine perspektivische Darstellung eines Eckbereichs des Transportbehälters nach Figur 1.

Der dargestellte Transportgehälter weist zwei gleiche Seitenwänden 1, 1', eine Vorderwand 2, eine Deckelwand 3 und einen Boden 4 auf. Alle Wände 1 bis 3 und der Boden 4 bestehen aus einem flexiblen Netzmaterial mit einer Maschenweite <1,5 mm aus einem Polyamid.

Entlang ihres unteren Kantenbereichs 5 überlappen sich die Seitenwände 1, 1' sowie die Vorderwand 2 mit Kantenbereichen 6 des Bodens 4. Die einander überlappenden Kantenbereiche 5, 6 sind durch Schweißen miteinander verbunden.

In gleicher Weise überlappen sich die oberen Kantenbereiche 7 der Seitenwände 1, 1' sowie der Vorderwand 2 mit den Kantenbereichen 8 der Deckelwand und die senkrechten Kantenbereiche 9 der Seitenwände 1, 1' und die senkrechten Kantenbereiche 10 der Vorderwand 2 und sind miteinander verschweißt.

Dadurch ist der Transportbehälter außer an seiner Rückseite, an der er eine Öffnung 11 besitzt, geschlossen.

Der Transportbehälter wird vorzugsweise annähernd in einer Form und Größe hergestellt, die der Form und Größe eines eine Hecköffnung aufweisenden Laderaums eines Fahrzeugs hergestellt.

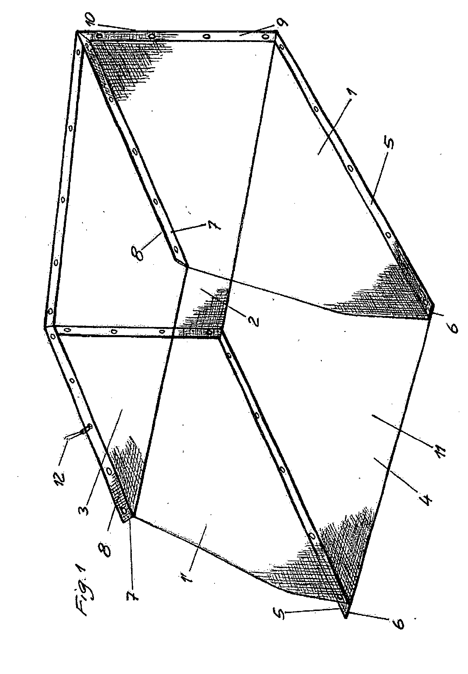

In den nach außen ausgestellten einander überlappenden Kantenbereichen sind in regelmäßigen Abständen Ösen 12 ausgebildet, an denen elastische Zugelemente 13 wie z.B. Gummischlaufen befestigt sind, die mit Halteelementen an Wandbereichen und dem Laderaumboden des Fahrzeugs lösbar verbindbar sind. Ein Zugelement 13 ist in Figur 1 dargestellt.

Entlang des Öffnungsrandes der Hecköffnung des Laderaums des nicht dargestellten Fahrzeugs erstreckt sich ein Steg 14, auf den ein im Querschnitt U-förmiger Dichtungsketer 15 aufgesteckt ist.

Bei durch eine Heckklappe geschlossener Hecköffnung liegt die Heckklappe mit ihrem umlaufenden Rand auf dem Dichtungsketer 15 auf.

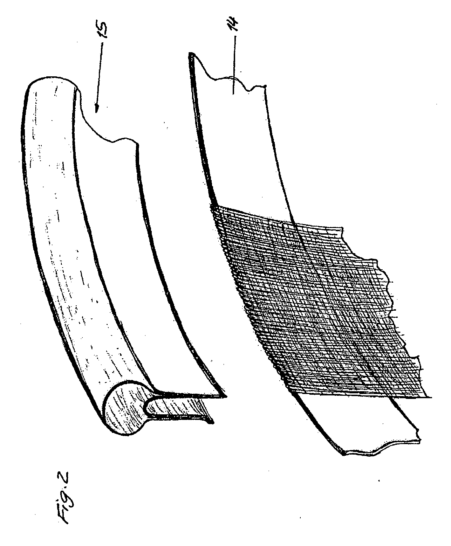

In Figur 2 sind Dichtungsketer 15 und Steg 14 in Explosionsdarstellung gezeigt, wobei der Randbereich entlang der Öffnung 11 des flexiblen Netzmaterials z.B. der Seitenwand 1 den Steg 14 übergreift. Wird nun der Dichtungsketer 15 auf den Steg 14 aufgesteckt, so ist der Randbereich des Transportbehälters entlang von dessen Öffnung 11 fest mit dem Öffnungsrand der Hecköffnung des Laderaums verbunden. Der Innenraum des Transportbehälters, in dem ein Tier, insbesondere ein Hund transporttiert wird, hat außer durch das flexible Netzmaterial keine Verbindung mit dem Laderaum des Fahrzeugs, gleich, ob die Heckklappe geschlossen oder offen ist.

Die Heckklappe ist dabei gleichzeitig auch der Verschluß des Transportbehälters.

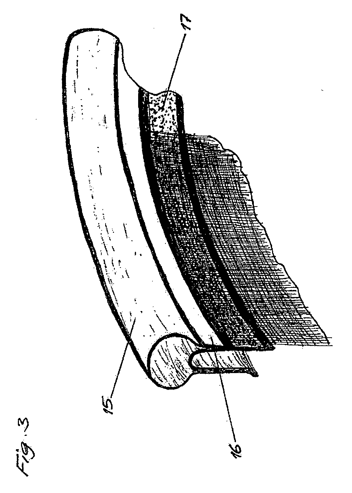

In Figur 3 ist eine Alternative zur Ausbildung nach Figur 2 gezeigt, wobei die Anordnung von Steg 14 und Dichtungsketer der Ausführung nach Figur 2 entspricht. Auf dem dem Innenbereich der Hecköffnung zugewandten Schenkel 16 des "U" des Dichtungsketers 15 ist ein klettverschlußartiges Band 17 fest angeordnet, an dem der Randbereich des Transportbehälters entlang von dessen Öffnung 11 fest mit dem Öffnungsrand der Hecköffnung des Laderaums verbunden.

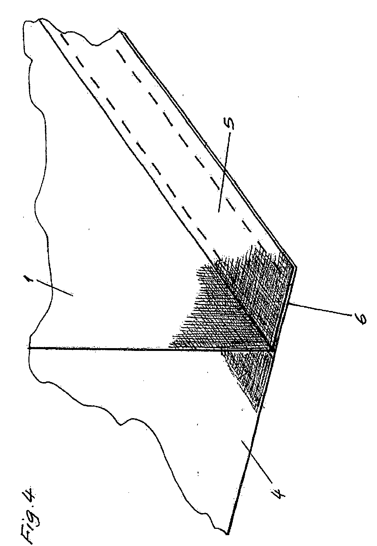

Figur 4 zeigt vergrößert die sich überlappenden Kantenbereiche 5 und 6 von Seitenwand 1 und Boden 4 im Bereich der Öffnung 11 des Transportbehälters.

### Bezugszeichenliste

- 1: Seitenwand
- 1': Seitenwand
- 2: Vorderwand
- 3: Deckelwand
- 4: Boden
- 5: unterer Kantenbereich Seitenwand
- 6: Kantenbereich Boden
- 7: oberer Kantenbereich Seitenwand
- 8: Kantenbereich Deckelwand
- 9: senkrechter Kantenbereich Seitenwand
- 10: senkrechter Kantenbereich Vorderwand
- 11: Öffnung
- 12: Ösen
- 13: Zugelement
- 14: Steg
- 15: Dichtungsketer
- 16: Schenkel
- 17: Band

## Patentansprüche

1. Transportbehälter für ein Fell aufweisende Tiere zur Anordnung in Fahrzeugen, der zwei Seitenwände (1, 1'), eine Vorderwand (2) sowie eine Deckelwand (3) aufweist, die ganz oder teilweise aus einem flexiblen Netzmaterial bestehen, **dadurch gekennzeichnet, daß** das flexible Netzmaterial eine Maschenweite < 1,5 mm aufweist und der Transportbehälter in einem Laderaum des Fahrzeugs anordenbar, der eine Hecköffnung aufweist, die durch eine Heckklappe verschließbar ist, wobei der Transportbehälter an der der Vorderwand (2) entgegengesetzten Seite eine zumindest annähernd der Hecköffnung des Fahrzeugs entsprechende Öffnung (11) aufweist und die Ränder der Seitenwände (1, 1') und der Deckelwand (3) sowie ggf. des Bodens (4) entlang der Öffnung (11) an dem durch die Heckklappe verschießbaren Öffnungsrand der Hecköffnung befestigbar sind oder wobei der Transportbehälter an der der Vorderwand entgegengesetzten Seite eine Öffnung aufweist und die Ränder der Seitenwände und der Deckelwand sowie ggf. des Bodens über ein schlauchartiges flexibles Zwischenteil entlang der Öffnung an dem durch die Heckklappe verschießbaren Öffnungsrand der Hecköffnung befestigbar sind.

2. Transportbehälter nach Anspruch 1, **dadurch gekennzeichnet, daß** das flexible Netzmaterial eine Maschenweite < 1,0 mm aufweist.

3. Transportbehälter nach einem der vorhergehenden Ansprüche,
**dadurch gekennzeichnet, daß** das flexible Netzmaterial eine Maschenweite zwischen 0,04 und 0,5 mm aufweist.

4. Transportbehälter nach einem der vorhergehenden Ansprüche,
**dadurch gekennzeichnet, daß** zumindest die Vorderwand (2) ganz oder teilweise aus dem flexiblen Netzmaterial bestehen.

5. Transportbehälter nach einem der vorhergehenden Ansprüche,
**dadurch gekennzeichnet, daß** das flexible Netzmaterial durchsichtig ist.

6. Transportbehälter nach einem der vorhergehenden Ansprüche,
dadurch gekannzeichnet, daß der Tiertransportbehälter einen Boden (4) aufweist.

7. Transportbehälter nach einem der vorhergehenden Ansprüche,
**dadurch gekennzeichnet, daß** der Boden (4) aus einem flexiblen Werkstoff besteht.

8. Transportbehälter nach einem der Ansprüche 6 und 7, **dadurch gekennzeichnet, daß** der Boden aus einem wasserundurchlässigen Werkstoff besteht

9. Transportbehälter nach einem der vorhergehenden Ansprüche, **dadurch gekennzeichnet, daß** das flexible Netzmaterial und/oder der Boden (4) aus einem Polyamid besteht.

10. Transportbehälter nach einem der Ansprüche 3 bis 5, **dadurch gekennzeichnet, daß** an dem Öffnungsrand der Hecköffnung eine Heckklappendichtung angeordnet ist und die Ränder der Seitenwände (1, 1') und der Deckelwand (3) sowie ggf. des Bodens (4) oder der dem Transportbehälter abgewandte umlaufende Rand des Zwischenteils mit der Dichtung oder einem Trägerteil der Dichtung verbindbar sind.

11. Transportbehälter nach Anspruch 10, **dadurch gekennzeichnet, daß** die Heckklappendichtung ein auf einen sich entlang der Hecköffnung erstreckenden Steg (14) aufsteckbarer annähernd Dichtungsketer (15) ist, wobei die Ränder der Seitenwände (1, 1') und der Deckelwand (3) sowie ggf. des Bodens (4) oder der umlaufende Rand des Zwischenteils an dem Steg angeordnet und von dem Dichtungsketer Obergriffen sind.

12. Transportbehälter nach Anspruch 10, **dadurch gekennzeichnet, daß** die Heckklappendichtung ein auf einen sich entlang der Hecköffnung erstreckenden Steg (14) aufsteckbarer U-förmiger Dichtungsketer (15) ist, wobei die Ränder der Seitenwände (1, 1') und der Deckelwand (3) sowie ggf. des Bodens (4) oder der umlaufende Rand des Zwischenteils an mit dem der Hecköffnung näheren Schenkel (16) des "U" des Dichtungsketer (15) verbindbar sind.

13. Transportbehälter nach Anspruch 12, **dadurch gekennzeichnet, daß** auf dem der Hecköffnung näheren Schenkel) (16) des "U" des Dichtungsketers (15) ein klettverschlußartiges Band (17) fest angeordnet ist, mit dem die Ränder der Seitenwände (1, 1') und der Deckelwand (3) sowie ggf. des Bodens (4) oder der umlaufende Rand des Zwischenteils lösbar verbindbar sind.

14. Transportbehälter nach einem der vorhergehenden Ansprüche,
**dadurch gekennzeichnet, daß** Seitenwände (1, 1'), Vorderwand (2), Deckelwand (3) und Boden (4) sowie ggf. das Zwischenteil separate Bauteile sind, die an ihren aneinander angrenzenden Rändern durch Schweißen undloder Vernähen miteinander verbunden sind.

15. Transportbehälter nach einem der vorhergehenden Ansprüche, **dadurch gekennzeichnet, daß** der Transportbehälter an Wandbereichen und/oder dem Laderaumboden des Laderaums des Fahrzeuge lösbar befestigbar ist.

16. Transportbehälter nach Anspruch 15, **dadurch gekennzeichnet, daß** entlang der Verbindungsbereiche der Seitenwände (1, 1') mit der Vorderwänd (2) und der Deckelwand (3) Befestigungsösen (12) angeordnet sind, die mittels Verbindungselementen mit Halteelementen an Wandbereichen und/oder dem Laderaumboden des Laderaums des Fahrzeugs verbindbar sind.

17. Transportbehälter nach Anspruch 15, **dadurch gekennzeichnet, daß** die Verbindungselemente elastische Zugelemente (13) sind.

## Claims

1. Transport container for animals having a coat for arranging in vehicles, the transport container having two side walls (1, 1'), a front wall (2) and a cover wall (3), said walls being entirely or partially composed of a flexible netting material, **characterized in that** the flexible netting material has a mesh width < 1.5 mm and the transport container is arrangeable in a vehicle boot which has a rear opening which is closable by a tailgate, wherein the transport container, on the side opposite the front wall (2), has an opening (11) at least approximately corresponding to the rear opening of the vehicle, and the borders of the side walls (1, 1') and of the cover wall (3) and optionally of the floor (4) are fastenable along the opening (11) to the opening border of the rear opening that is closable by the tailgate or wherein the transport container, on the side opposite the front wall, has an opening, and the borders of the side walls and of the cover wall and optionally of the floor are fastenable along the opening via a tubular, flexible intermediate part to the opening border of the rear opening that is closable by the tailgate.

2. Transport container according to Claim 1, **characterized in that** the flexible netting material has a mesh width < 1.0 mm.

3. Transport container according to either of the preceding claims, **characterized in that** the flexible netting material has a mesh width of between 0.04 and 0.5 mm.

4. Transport container according to one of the preceding claims, **characterized in that** at least the front wall (2) is entirely or partially composed of the flexible netting material.

5. Transport container according to one of the preceding claims, **characterized in that** the flexible netting material is transparent.

6. Transport container according to one of the preceding claims, **characterized in that** the animal transport container has a floor (4).

7. Transport container according to one of the preceding claims, **characterized in that** the floor (4) is composed of a flexible material.

8. Transport container according to either of Claims 6 and 7, **characterized in that** the floor is composed of a water-impermeable material.

9. Transport container according to one of the preceding claims, **characterized in that** the flexible netting material and/or the floor (4) are/is composed of a polyamide.

10. Transport container according to one of Claims 3 to 5, **characterized in that** a tailgate seal is arranged on the opening border of the rear opening, and the borders of the side walls (1, 1') and of the cover wall (3) and optionally of the floor (4), or the peripheral border of the intermediate part, which border faces away from the transport container, are/is connectable to the seal or to a carrier part of the seal.

11. Transport container according to Claim 10, **characterized in that** the tailgate seal is a sealing beading (15) which can be slipped approximately on to a web (14) extending along the rear opening, wherein the borders of the side walls (1, 1') and of the cover wall (3) and optionally of the floor (4), or the peripheral border of the intermediate part are/is arranged on the web and overlapped by the sealing beading.

12. Transport container according to Claim 10, **characterized in that** the tailgate seal is a U-shaped sealing beading (15) which can be slipped on to a web (14) extending along the rear opening, wherein the borders of the side walls (1, 1') and of the cover wall (3) and optionally of the floor (4), or the peripheral border of the intermediate part, are/is connectable to that limb (16) of the "U" of the sealing beading (15) which is closer to the rear opening.

13. Transport container according to Claim 12, **characterized in that** a touch-and-close-like strip (17) is fixedly arranged on that limb (16) of the "U" of the sealing beading (15) which is closer to the rear opening, and the borders of the side walls (1, 1') and of the cover wall (3) and optionally of the floor (4), or the peripheral border of the intermediate part, are/is releasably connectable to said touch-and-close-like strip.

14. Transport container according to one of the preceding claims, **characterized in that** the side walls (1, 1'), front wall (2), cover wall (3) and floor (4), and optionally the intermediate part, are separate components which are connected to one another at their mutually adjacent borders by welding and/or sewing.

15. Transport container according to one of the preceding claims, **characterized in that** the transport container is releasably fastenable to wall regions and/or to the boot floor of the boot of the vehicle.

16. Transport container according to Claim 15, **characterized in that** fastening eyes (12) are arranged along the connecting regions of the side walls (1, 1') to the front wall (2) and to the cover wall (3), said fastening eyes being connectable by means of connecting elements to holding elements on wall regions and/or on the boot floor of the boot of the vehicle.

17. Transport container according to Claim 15, **characterized in that** the connecting elements are elastic tension elements (13).

## Revendications

1. Récipient de transport pour un animal à fourrure, pour mise en place dans des véhicules, qui comprend deux parois latérales (1, 1'), une paroi avant (2), ainsi qu'une paroi formant couvercle (3), qui en totalité ou en partie sont constituées d'un matériau souple en filet, **caractérisé en ce que** le matériau souple en filet présente une ouverture de maille < 1,5 mm, et le récipient de transport peut être disposé dans un espace de rangement d'un véhicule, qui comprend une ouverture arrière pouvant être fermée par un volet arrière, le récipient de transport comprenant, sur son côté opposé à la paroi avant (2), une ouverture (11) correspondant au moins approximativement à l'ouverture arrière du véhicule, et les bords des parois latérales (1, 1') et de la paroi formant couvercle (3), ainsi qu'éventuellement du sol (4), pouvant le long de l'ouverture (11) être fixés au bord d'ouverture, pouvant être fermé par le volet arrière, de l'ouverture arrière, ou le récipient de transport comprenant une ouverture sur son côté opposé à la paroi avant, et les bords des parois latérales et de la paroi formant couvercle, ainsi qu'éventuellement du sol, pouvant, grâce à une pièce intermédiaire souple de type tuyau flexible, être fixés le long de l'ouverture au bord d'ouverture, pouvant être fermé par le volet arrière, de l'ouverture arrière.

2. Récipient de transport selon la revendication 1, **caractérisé en ce que** le matériau souple en filet présente une ouverture de maille < 1,0 mm.

3. Récipient de transport selon l'une des revendications précédentes, **caractérisé en ce que** le matériau souple en filet présente une ouverture de maille comprise entre 0,04 et 0,5 mm.

4. Récipient de transport selon l'une des revendications précédentes, **caractérisé en ce qu'**au moins la paroi avant (2) est en totalité ou en partie constituée du matériau souple en filet.

5. Récipient de transport selon l'une des revendications précédentes, **caractérisé en ce que** le matériau souple en filet est transparent.

6. Récipient de transport selon l'une des revendications précédentes, **caractérisé en ce que** le récipient de transport comprend un sol (4).

7. Récipient de transport selon l'une des revendications précédentes, **caractérisé en ce que** le sol (4) est constitué d'un matériau souple.

8. Récipient de transport selon l'une des revendications 6 et 7, **caractérisé en ce que** le sol est constitué d'un matériau imperméable à l'eau.

9. Récipient de transport selon l'une des revendications précédentes, **caractérisé en ce que** le matériau souple en filet et/ou le sol (4) sont constitués d'un polyamide.

10. Récipient de transport selon l'une des revendications 3 à 5, **caractérisé en ce qu'**une garniture d'étanchéité est disposée contre le bord d'ouverture de l'ouverture arrière, et les bords des parois latérales (1, 1') et de la paroi formant couvercle (3) ainsi qu'éventuellement du sol (4), ou le bord périphérique de la pièce intermédiaire, opposé au récipient de transport, peuvent être reliés à la garniture d'étanchéité ou à une pièce support de la garniture d'étanchéité.

11. Récipient de transport selon la revendication 10, **caractérisé en ce que** la garniture d'étanchéité du volet arrière est un bourrelet d'étanchéité (15), pouvant s'enficher approximativement sur une traverse (14) s'étendant le long de l'ouverture arrière, les bords des parois latérales (1, 1') et de la paroi formant couvercle (3) ainsi qu'éventuellement du sol (4), ou le bord périphérique de la pièce intermédiaire, étant disposés contre la traverse et étant recouverts par le bourrelet d'étanchéité.

12. Récipient de transport selon la revendication 10, **caractérisé en ce que** la garniture d'étanchéité du volet arrière est un bourrelet d'étanchéité (15) en forme de U, pouvant s'enficher sur une traverse (14) s'étendant le long de l'ouverture arrière, les bords des parois latérales (1, 1') et de la paroi formant couvercle (3), ainsi qu'éventuellement du sol (4), ou le bord périphérique de la pièce intermédiaire, pouvant être reliés à la branche (16) la plus proche de l'ouverture arrière du "U" du bourrelet d'étanchéité (15).

13. Récipient de transport selon la revendication 12, **caractérisé en ce que**, sur la branche (16) la plus proche de l'ouverture arrière du "U" du bourrelet d'étanchéité (15) une bande (17) de type auto-agrippant est disposée à demeure, à l'aide de laquelle les bords des parois latérales (1, 1') et de la paroi formant couvercle (3), ainsi qu'éventuellement du sol (4), ou le bord périphérique de la pièce intermédiaire, peuvent être reliés d'une manière amovible.

14. Récipient de transport selon l'une des revendications précédentes, **caractérisé en ce que** les parois latérales (1, 1'), la paroi avant (2), la paroi formant couvercle (3) et le sol (4), ainsi qu'éventuellement la pièce intermédiaire, sont des composants distincts, qui au niveau de leurs bords contigus les uns aux autres sont reliés les uns aux autres par soudage et/ou par couture.

15. Récipient de transport selon l'une des revendications précédentes, **caractérisé en ce que** le récipient de transport peut être fixé d'une manière amovible aux zones de paroi et/ou au sol de l'espace de chargement du véhicule.

16. Récipient de transport selon la revendication 15, **caractérisé en ce que**, le long des zones de liaison des parois latérales (1, 1') avec la paroi avant (2) et la paroi formant couvercle (3), des oeillets de fixation (12) sont disposés, qui à l'aide d'éléments de liaison peuvent être reliés à des éléments de retenue contre les zones de paroi et/ou contre le sol de l'espace de chargement du véhicule.

17. Récipient de transport selon la revendication 15, **caractérisé en ce que** les éléments de liaison sont des éléments de traction élastiques (13).
